# EUROPÄISCHE PATENTANMELDUNG

(11) **EP 1 394 094 A2**
(43) Veröffentlichungstag der Anmeldung: **03.03.2004**
(21) Anmeldenummer: 03017169.8
(22) Anmeldetag: 29.07.2003
(51) Int. Cl.: B65H 75/36, A62B 35/04, B66C 13/12, B66C 13/14

(54) **Zugmittelspeicher**

(30) Priorität: 29.07.2002 DE 10234627
(71) Anmelder: Hartmann & König Stromzuführungs AG, 76676 Graben-Neudorf (DE)
(72) Erfinder: Herberger, Hubert, 76676 Graben-Neudorf (DE); Buckel, Konrad, 91785 Pleinfeld (DE)
(74) Vertreter: Kesselhut, Wolf

(57) **Zusammenfassung**

Ein Zugmittelspeicher (1) zum Speichern eines Zugmittels (6), mit einem Gehäuse (2) sowie mit in dem Gehäuse (2) auf einander gegenüberliegenden Seiten angeordneten Umlenkelementen (4), die mit einer federelastischen Kraft beaufschlagbar sind, und über die das Zugmittel (6) mäanderförmig geführt ist, ist dadurch gekennzeichnet, dass das Zugmittel (6) durch das Gehäuse (2) des Zugmittelspeichers (1) hindurchgeführt ist.

## Beschreibung

Die Erfindung betrifft einen Zugmittelspeicher gemäß dem Oberbegriff von Anspruch 1.

Zugmittelspeicher werden dazu eingesetzt, um mechanische Energie zu speichern, und diese bei Bedarf wieder freizugeben. In diesem Zusammenhang ist es beispielsweise bekannt, Kabeltrommeln zur Stromversorgung von verfahrbaren Kränen mit einer Spiralfeder zu koppeln, die beim Ausfahren des Kranes - und dem damit verbundenen Abrollen des Kabels von der Kabeltrommel - gespannt wird. Beim Zurückfahren des Krans wird das Kabel durch die Spannkraft der Zugfeder anschließend automatisch wieder aufgerollt.

Hierbei ergibt sich das Problem, dass der Einsatz von Kabeltrommeln in der Regel einen Schleifring zur Übertragung des elektrischen Stroms von einem Festanschluss zu dem sich auf- und abwickelnden Kabel auf der Kabeltrommel erfordert, der einem vergleichsweise hohen Verschleiß unterliegt und beim Einsatz im Zusammenhang mit explosiven Stoffen in aufwändiger Weise zu kapseln ist, um die Gefahr einer Explosion auszuschließen.

Weiterhin ist es bekannt, Sicherheitsgurte in Kraftfahrzeugen mit einem Aufrollmechanismus zu versehen, der ebenfalls eine Spiralfeder umfasst, die beim Ausziehen des Sicherheitsgurtes gespannt wird, und diesen mit einer mehr oder minder großen Rückzugskraft beaufschlagt.

In gleicher Weise ist es bekannt, Schlauchtrommeln für Gartensprenger mit einer Spiralfeder zu koppeln, die den auf die Schlauchtrommel aufgerollten Schlauch nach dem Ausziehen ebenfalls mit einer Rückzugskraft beaufschlagt, um z.B. das Einziehen des Schlauches zu automatisieren. Auch hierbei ist es erforderlich, die Zufuhr der Flüssigkeit oder Luft von einem Festanschluss zum Schlauch auf der Schlauchtrommel über eine Drehdurchführung vorzunehmen, die häufig zu Undichtigkeiten neigt, was auch der Fall ist, wenn keine Spiralfeder vorgesehen ist.

Aus der DE-PS 197 15 312 C1 ist ein Schnürverschlusssystem für Schuhe bekannt, das einen Zugmittelspeicher mit an Federelementen geführten Umlenkelementen umfasst, über welche die mit ihrem einen Ende innerhalb des Gehäuses des Zugmittelspeichers befestigten Schnürsenkel mäanderförmig geführt werden. Die Schrift gibt keinen Hinweis darauf, den Zugmittelspeicher im Zusammenhang mit anderen Zugmitteln, insbesondere elektrischen Stromkabeln oder ein Druckgas oder eine Flüssigkeit führenden Schläuchen für andere Anwendungen als bei Schuhen einzusetzen, bei denen erheblich größere Kräfte und Drehmomente wirken und vollständig andere technische Probleme zu überkommen sind.

Weiterhin ist aus der DE-PS-19613 381 C1 eine Kabelspeichervorrichtung zur Speicherung des elektrischen Stromzuführungskabels in einem Staubsauger bekannt, bei der das elektrische Stromzuführungskabel um rollenförmige Wickelkörper herumgewickelt ist, die an den Ecken eines Quadrats angeordnet sind, und durch Spiral-Druckfedern mit einer federelastischen, nach außen hin wirkenden Kraft beaufschlagt werden. Die Schrift gibt keinen Hinweis darauf, den Wickelkörper durch Umlenkelemente zu bilden, die abwechselnd entlang einer Reihe in der Weise angeordnet sind, dass das Stromzuführungskabel mäanderförmig durch das Gehäuse der Kabelspeichervorrichtung geführt wird. Zudem ist der Schrift nicht entnehmbar, neben einem Stromzuführungskabel andere Zugmittel einzusetzen, und den Speicher bei anderen Anwendungen als bei einem Staubsauger zu verwenden.

Demgemäß ist es eine Aufgabe der vorliegenden Erfindung, einen weiteren Zugmittelspeicher zu schaffen, der die Speicherung von verschiedenen Zugmitteln ermöglicht und sich in zahlreichen unterschiedlichen Anwendungen, insbesondere zur Vermeidung von übermäßig hohen Zugbelastungen bei den Stromzufuhrkabeln von Motorgreifern oder Spreader-Kränen, einsetzen lässt.

Diese Aufgabe wird erfindungsgemäß durch die Merkmale von Anspruch 1 gelöst.

Weitere Merkmale der Erfindung sind in den Unteransprüchen enthalten.

Gemäß der Erfindung umfasst ein Zugmittelspeicher zum Speichern eines Zugmittels ein Gehäuse, in dem vorzugsweise linear bewegte Umlenkelemente in Form von Rollen oder Walzen beweglich aufgenommen sind, die durch Federelemente oder durch pneumatische oder hydraulische Stellzylinder mit einer federelastischen Kraft beaufschlagt werden. Das Zugmittel, beispielsweise ein Zugseil, Riemen/Zahnriemen, elektrisches Stromkabel, ein Flüssigkeits- oder Druckgasschlauch, insbesondere Druckluftschlauch, wird über die Umlenkelemente in der Weise geführt, dass sich für das Zugmittel ein mäanderförmiger Bahnverlauf ergibt. Das Zugmittel ist in erfindungsgemäßer Weise durch das Gehäuse des Zugmittelspeichers hindurchgeführt, wobei das erste Ende des Zugmittels, welches beispielsweise an einen stationären Stromanschluss oder an eine stationäre Flüssigkeits- oder Druckgasquelle angeschlossen werden kann, durch eine erste Austrittsöffnung aus dem Gehäuse herausgeführt ist, und das andere Ende des Zugmittels, welches mit einer beweglichen, vorzugsweise verfahrbaren Einrichtung verbunden wird, durch eine zweite Austrittsöffnung aus dem Gehäuse herausziehbar ist.

Eine bevorzugte Ausgestaltung des erfindungsgemäßen Zugmittelspeichers, bei der eine hohe Ausnutzung des im Speicher zur Verfügung stehenden Raumes erhalten wird, zeichnet sich dadurch aus, dass die Umlenkelemente wechselweise auf einander gegenüberliegenden Seiten des Gehäuses angeordnet sind, und jedes Umlenkelement für sich durch eine eigene federelastische Kraft, die beispielsweise durch eine Spiraldruckfeder oder einen Pneumatikzylinder erzeugt wird, beaufschlagt wird, die das Umlenkelement von einer gedachten Mittellinie des Gehäuses weg zu den Außenseiten des Gehäuses 2 hin drängt.

Durch die Erfindung ergibt sich der Vorteil, dass sich der erfindungsgemäße Zugmittelspeicher bei einer Vielzahl von unterschiedlichen Anwendungen einsetzen lässt, bei denen es darauf ankommt, dass ein Medium, beispielsweise Strom oder Gas oder eine Flüssigkeit, oder auch die über ein herkömmliches Seil zu übertragenden Zugkräfte, durch den Zugmittelspeicher hindurchgeleitet wird, und gleichzeitig ein Längenausgleich durch ein entsprechendes Heraus- oder Hereinziehen des Zugmittels in den Speicher gewährleistet sein muss.

Die Erfindung wird nachfolgend mit Bezug auf die Zeichnungen anhand bevorzugter Ausführungsformen beschrieben.

In den Zeichnungen zeigen:
- Fig. 1: eine schematische Seitenansicht des erfindungsgemäßen Zugmittelspeichers mit eingezogenem Zugmittel,
- Fig. 2: eine schematische Seitenansicht des Zugmittelspeichers von Fig. 1 mit ausgezogenem Zugmittel,
- Fig. 3: eine weitere Ausführungsform eines erfindungsgemäßen Zugmittelspeichers, bei der die Umlenkelemente durch Hydraulik- oder Pneumatikzylinder über eine zugehörige Druckmittelquelle und ein Ventil mit der federelastischen Kraft beaufschlagbar sind,
- Fig. 4: eine weitere Verwendung des erfindungsgemäßen Zugmittelspeichers zur Stromzuführung zu einem beweglichen Stromverbraucher in Form eines verfahrbaren schematisch gezeigten Krans, sowie zur Verdeutlichung des Einsatzes des erfindungsgemäßen Zugmittelspeichers zur Speicherung der Signalleitung eines die Position einer beweglichen Einrichtung detektierenden Positionssensors,
- Fig. 5: eine weitere Anwendungsform des erfindungsgemäßen Zugmittelspeichers, bei dem dieser als ein mobiler, tragbarer Kabelspeicher eingesetzt wird,
- Fig. 6: eine weitere Anwendungsform des erfindungsgemäßen Zugmittelspeichers, bei der dieser als mechanischer Energiespeicher zum Antrieb einer Kabeltrommel oder Schlauchtrommel über ein entsprechendes Untersetzungs- oder Übersetzungsgetriebe verwendet wird,
- Fig. 7: eine weitere Anwendung des erfindungsgemäßen Zugmittelspeichers, bei dem das Zugmittel als Flüssigkeits- oder Druckgasschlauch ausgestaltet ist, welcher mit seinem einen Ende strömungsmäßig an eine Flüssigkeits- oder Druckgasquelle angeschlossen ist, und dessen anderes Ende zur Verteilung der Flüssigkeit oder des Druckmittels mit einer Düse versehen ist,
- Fig. 8: eine weitere Anwendung eines Zugmittelspeichers als Zugentlastung für das Stromzufuhrkabel oder Steuerkabel eines Motorgreifers oder Spreader-Krans, bei dem das Stromzufuhrkabel über ein zusätzliches Seil oder ein Band mit dem Gehäuse des Motorgreifers oder Spreader-Krans verbunden ist, um die beim Anheben und Absenken des Greifers bzw. der Hebeeinrichtung des Spreader-Krans entstehenden Zugspannungsspitzen zu dämpfen,
- Fig. 9: eine weitere Verwendung des erfindungsgemäßen Zugmittelspeichers zur Erzeugung einer unterstützenden Hubkraft zur Entlastung des Hubantriebes beim Heben eines Containers oder Fahrstuhls, und
- Fig. 10: eine weitere erfindungsgemäße Verwendung eines Zugmittelspeichers, bei dem das Zugmittel durch das Gehäuse hindurchgeführt, oder das eine Ende des Zugmittels innerhalb des Gehäuses befestigt ist, als Absturzsicherung von Personen, welche über Gurte nach Art eines Rucksacks auf dem Rücken der Person getragen wird.

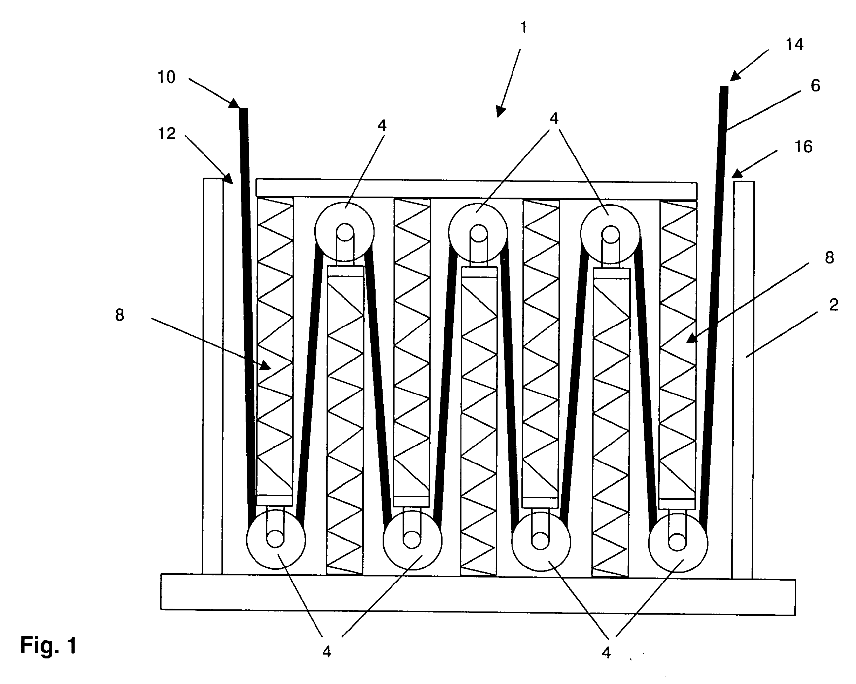

Wie in Fig. 1 gezeigt ist, umfasst ein erfindungsgemäßer Zugmittelspeicher 1 ein Gehäuse 2, in dem eine Vielzahl von Umlenkelementen 4 in Form von Rollen oder Walzen in einer oder in mehreren parallel hintereinanderliegenden Reihen angeordnet sind. Über die Umlenkelemente 4 ist ein Zugmittel 6 entlang eines im Wesentlichen mäanderförmigen oder S-förmigen Pfades geführt.

Die Umlenkelemente 4 sind dabei wechselweise auf einander gegenüberliegenden Seiten des Gehäuses 2 angeordnet, und werden durch federelastische Elemente 8, beispielsweise Spiral-Druckfedern, mit einer federelastischen Kraft beaufschlagt, die die Umlenkelemente 4 jeweils von der gedachten Mittellinie des erfindungsgemäßen Zugmittelspeichers 1 weg zu den Außenseiten des Gehäuses 2 hindrängt, so dass das Zugmittel 6 aufgrund der federelastischen Kraft der Umlenkelemente 4 in das Gehäuse 2 des Zumittelspeichers 1 hineingezogen wird. Ein Teil der Umlenkelemente 4 kann gewünschten Falls jedoch auch fest oder starr mit der zugehörigen Gehäuseseite verbunden sein.

Ein erstes Ende 10 des Zugmittels 6 tritt bei der in Fig. 1 dargestellten Ausführungsform der Erfindung durch eine erste Austrittsöffnung 12, und ein zweites Ende 14 des Zugelements 6 durch eine zweite Austrittsöffnung 16 hindurch aus dem Gehäuse 2 des erfindungsgemäßen Zugmittelspeichers 1 aus.

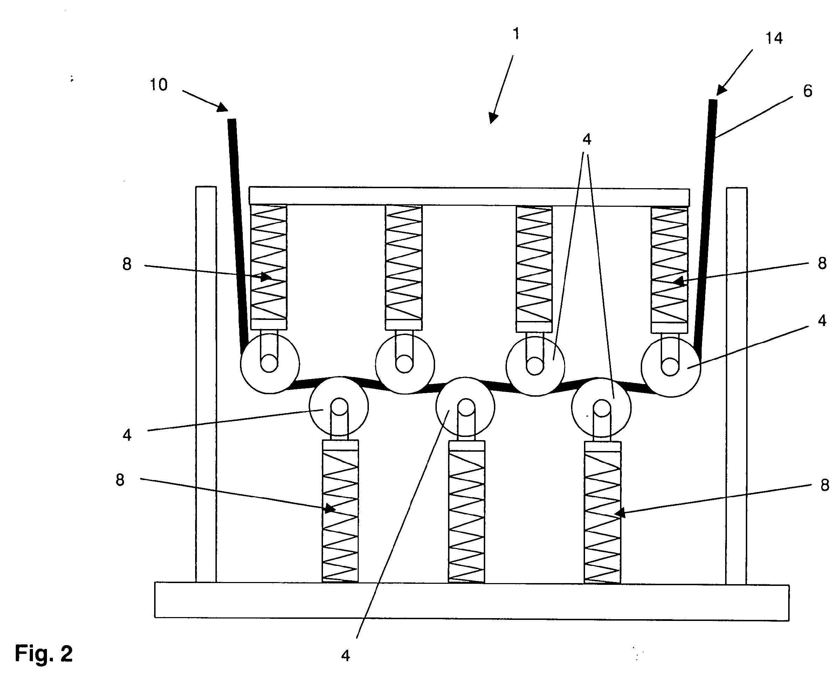

Wenn das Zugmittel 6 am ersten oder am zweiten Ende 10, 14 gemäß der Darstellung von Fig. 2 aus dem Gehäuse 2 herausgezogen wird, so wird die auf das Zugmittel 6 hierbei ausgeübte Zugkraft über die Umlenkelemente 4 auf die federelastischen Elemente 8 übertragen, die dadurch zusammengepresst und gespannt werden. Die federelastischen Elemente 8 können anstelle von Spiralfedern auch ein Elastomer umfassen, beispielsweise ein Gummiseil, welches auf die Umlenkelemente 4 wirkt und diese zur Außenseite des Gehäuses 2 hin zieht.

Weiterhin kann es vorgesehen sein, die Enden 10 und 14 des Zugmittels 6 durch nicht näher dargestellte Stopper, wie z. B. Klemmverschlüsse, zu fixieren, die außerhalb des Gehäuses 2 am Zugmittel 6 befestigt werden.

Durch den Aufbau des erfindungsgemäßen Zugmittelspeichers 1 verteilt sich die Zugkraft innerhalb des Zugmittels 6 gleichmäßig, und steigt im Wesentlichen linear an. Hinzu kommt die kompakte Bauweise des Zumittelspeichers 1, die es ermöglicht, sehr große Kräfte auf kleinstem Raum bereitzustellen, wenn für die federelastischen Elemente 8 entsprechend große Federkonstanten gewählt werden. Darüber hinaus besitzt der erfindungsgemäße Zugmittelspeicher 1 den Vorteil, das dieser eine im Vergleich zu bekannten Spiralfedern erheblich geringere Verschleißanfälligkeit aufweist.

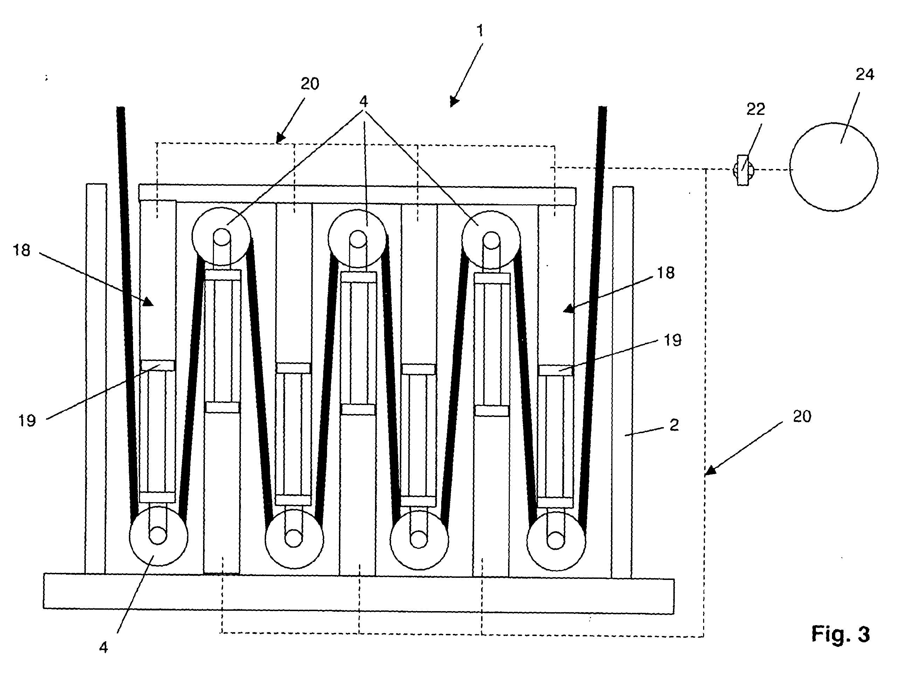

Gemäß der weiteren, in Fig. 3 dargestellten Ausführungsform der Erfindung umfassen die federelastischen Elemente 8 einen Pneumatikzylinder oder Hydraulikzylinder 18, in dem ein entsprechend ausgestalteter Kolben 19 im Wesentlichen linear verfahrbar angeordnet ist, der auf die Umlenkelemente 4 wirkt. Die Pneumatik- oder Hydraulikzylinder 18 sind über eine entsprechende Zuleitung 20 sowie ein Ventil 22 mit einer Druckmittelquelle 24 verbunden, welche die Flüssigkeit oder das Druckgas unter Druck in die Zylinder 18 drängt, um die Umlenkelemente 4 mit einer federelastischen Kraft zu beaufschlagen, und dadurch das Zugmittel 6 in den erfindungsgemäßen Zugmittelspeicher 1 einzuziehen.

Bei dieser Ausführungsform ergibt sich der Vorteil, dass insbesondere bei einer Verwendung von Druckgas, beispielsweise Druckluft, das Zugmittel 6 nahezu kräftefrei aus dem erfindungsgemäßen Zugmittelspeicher 1 herausgezogen werden kann. Zum Einziehen des Zugmittels 6 wird das Ventil 22, welches in diesem Falle vorzugsweise als ein Dreiwegeventil ausgestaltet ist, aus der Entlüftungsstellung - in der die die Zylinder 18 mit Umgebungsdruck beaufschlagt werden - in die Durchlassstellung gedreht, um die Zylinder 18 wiederum mit dem Druckgas aus der Druckgasquelle 24 zu füllen, so dass die Kolben 19 die Umlenkelemente 4 wiederum zur Außenseite des Gehäuses 2 hin bewegen.

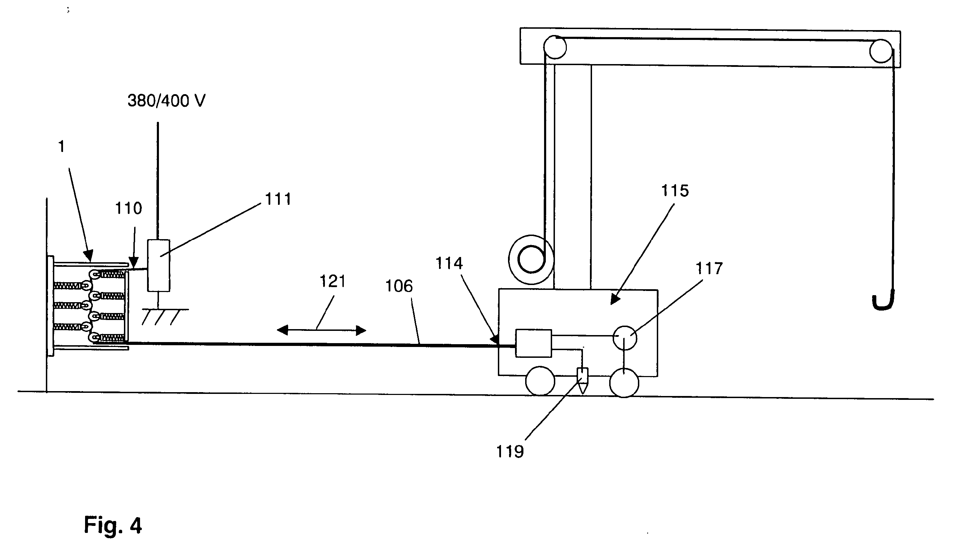

Gemäß einer ersten, in Fig. 4 dargestellten Anwendung des erfindungsgemäßen Zugmittelspeichers 1 ist das Zugmittel 6 als ein elektrisches Stromkabel 106 ausgebildet, dessen erstes Ende 110 mit einem ortsfesten Stromanschluss 111 verbunden ist. Das zweite Ende 114 des Stromkabels 106 ist an eine bewegliche oder verfahrbare Einrichtung 115 - im Falle von Fig. 4 ein Kran - angeschlossen, welche einen Stromverbraucher, beispielsweise einen Antriebsmotor 117, enthält.

In gleicher Weise kann das elektrische Stromkabel 106 jedoch ebenfalls als elektrische Zuleitung für einen Positionssensor 119 eingesetzt werden, der die Position des Krans oder allgemein der verfahrbaren Einrichtung 115 detektiert, und diese in Form eines elektrischen Signals beispielsweise an eine nicht dargestellte Steuerungseinrichtung weiterleitet.

Durch den Einsatz des erfindungsgemäßen Zugmittelspeichers 1 zur Speicherung des Stromkabels 106 ist es hierbei möglich, den Kran 115 in Richtung des Pfeils 121 vor- und zurückzuverfahren, wobei eine mehr oder weniger große Menge des Stromkabels 106 innerhalb des Zugmittelspeichers 1 aufgenommen wird.

In gleicher Weise ist es möglich, dass die bewegliche Einrichtung einen in den Figuren nicht dargestellten Fahrstuhl umfasst, wobei der Positionssensor z. B. die momentane Position des Fahrstuhls innerhalb des Fahrstuhlschachts detektiert, und an eine extern angeordnete Steuerungseinrichtung oder Überwachungseinrichtung weiterleitet, die mit dem ersten Ende 110 des Stromkabels 106 verbunden ist.

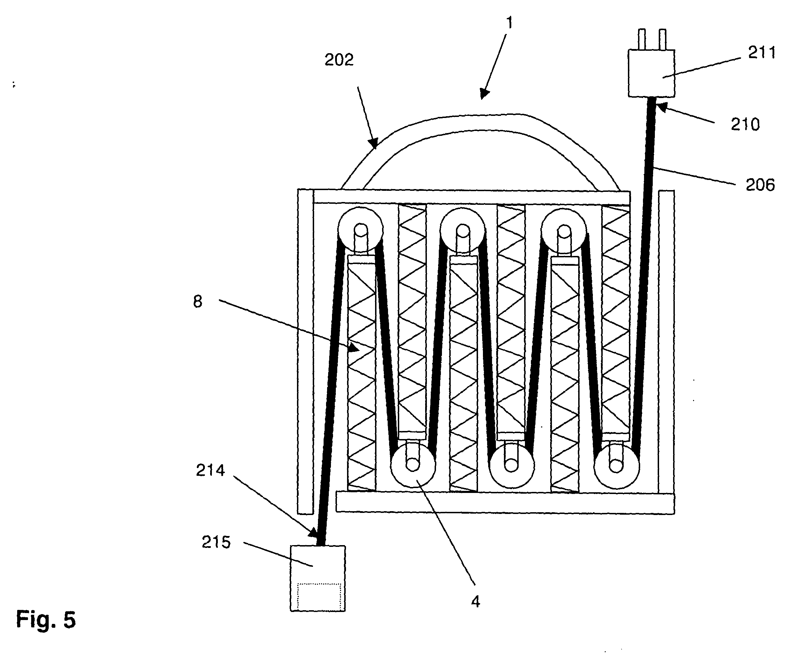

Gemäß einer weiteren Verwendung des erfindungsgemäßen Kabelspeichers, die in Fig. 5 gezeigt ist, ist dieser in einem tragbaren, mit einem Griff versehenen Gehäuse 202 untergebracht, und das erste Ende 210 des Stromkabels 206 mit einem Stecker 211 und das zweite Ende 214 des Stromkabels 206 mit einem zugehörigen komplementären Steckadapter oder einer Steckbuchse 215 verbunden. Hierbei kann es vorgesehen sein, die Steckbuchse 215 in das Gehäuse 202 des mobilen Zugmittelspeichers zu integrieren, so dass ein weiterer Stromverbraucher direkt in die im Gehäuses 202 angeordnete Steckbuchse oder Steckdose 215 eingesteckt werden kann, und das Stromkabel 206 durch Herausziehen des Steckers 211 aus dem Gehäuse 202 herausgezogen werden kann.

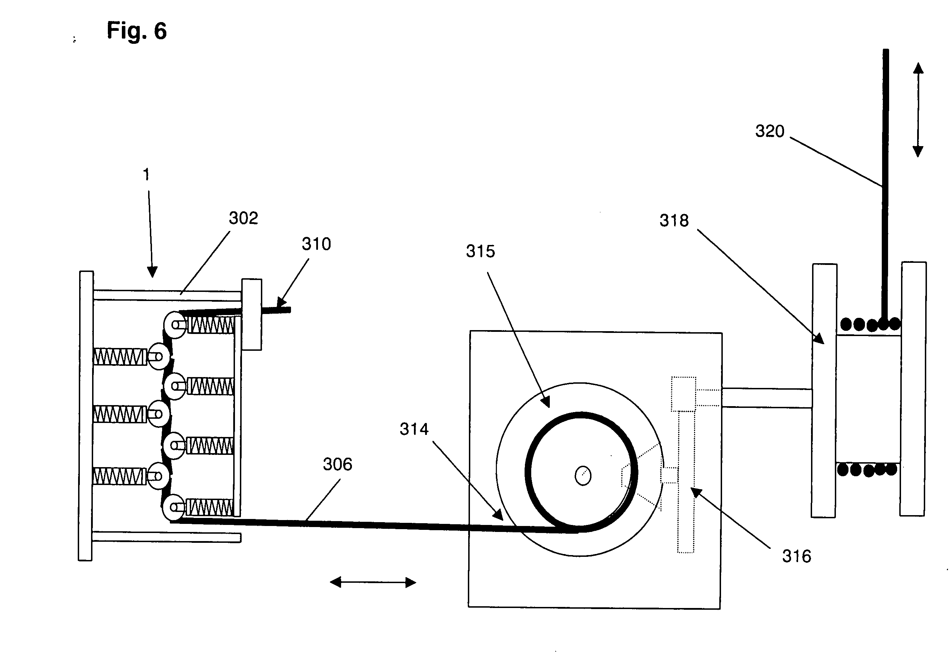

Gemäß einer weiteren, in Fig. 6 dargestellten Verwendungsmöglichkeit des erfindungsgemäßen Zugmittelspeichers 1 wird das Zugmittel durch ein reißfestes Zugseil oder Zugband 306 gebildet, welches mit seinem ersten Ende 310 im Inneren oder auf der Außenseite des Gehäuses 302, beispielsweise mittels einer Klemme 303 befestigt ist, und das mit seinem zweiten Ende 314 über eine entsprechende Seiltrommel 315 und ein in Fig. 6 in punktierten Linien dargestelltes Untersetzungsgetriebe 316 auf eine trommelförmige Aufrolleinrichtung 318 wirkt, beispielsweise eine Kabeltrommel oder Schlauchtrommel, um diese zum Aufwickeln eines darauf angeordneten Seils oder Kabels 320 mit einem Drehmoment zu beaufschlagen, dessen Größe davon abhängt, inwieweit das Zugseil oder Zugband 306 aus dem erfindungsgemäßen Zugmittelspeicher 1 herausgezogen wurde.

Der erfindungsgemäße Zugmittelspeicher 1 übernimmt hierbei somit die Funktion einer herkömmlichen Spiralfeder, wobei dieser jedoch den Vorteil aufweist, dass die darin vorgesehenen Spiral-Druckfedern oder in sonstiger Weise linear bewegten federelastischen Elemente 8 einen erheblich geringeren Verschleiß und eine erheblich höhere Zuverlässigkeit besitzen.

In gleicher Weise besteht gemäß einer weiteren Anwendung des der Ausführungsform von Fig. 6 zugrundeliegenden Prinzips die Möglichkeit, dass die trommelförmige Aufrolleinrichtung 318 die nicht gezeigte Spule eines Sicherheitsgurtes zur Sicherung von Fahrgästen und Personen oder Gegenständen in einem Kraftfahrzeug oder in einem Flugzeug bildet. Hierbei kann es insbesondere vorteilhaft sein, die Seiltrommel 315 direkt ohne ein zwischengeschaltetes Übersetzungsgetriebe 316 auf einer Achse mit der trommelförmigen Aufrolleinrichtung 318 anzuordnen.

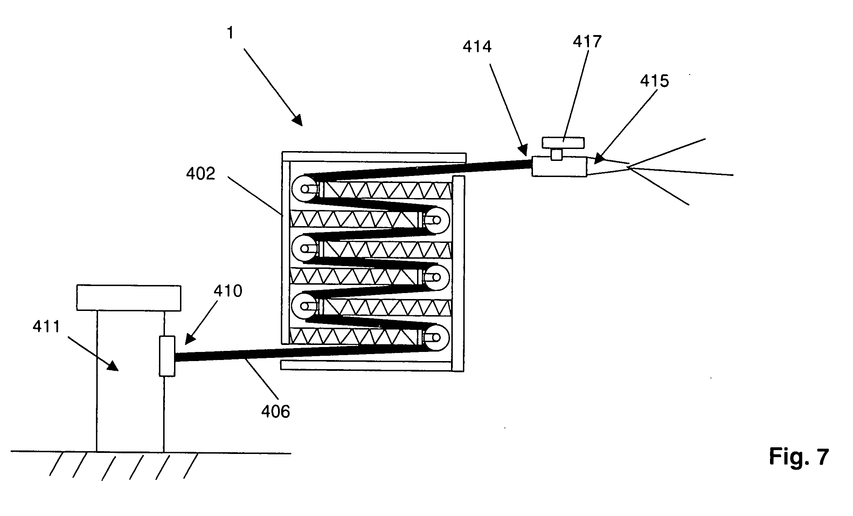

Bei einer weiteren, in Fig. 7 gezeigten Verwendung des erfindungsgemäßen Zugmittelspeichers 1 ist das Zugmittel als ein Flüssigkeits- oder Druckgasschlauch 406 ausgebildet, dessen erstes Ende 410 strömungsmäßig an eine ortsfest Druckmittelquelle 411, beispielsweise einen Presslufttank oder einen Hydranten oder einen sonstigen Wasseranschluss 411 angeschlossen ist.

Das zweite Ende 414 des Druckmittelschlauchs 406 ist beispielsweise mit einer Düse 415 verbunden, die einen Hahn 417 aufweist, über welchen die Menge des von der Druckmittelquelle 411 gelieferten Druckmittels eingestellt werden kann. In gleicher Weise kann es jedoch auch vorgesehen sein, dass das zweite Ende 414 mit einem Anschlussadapter verbunden ist, so dass der in Fig. 4 gezeigte erfindungsgemäße Zugmittelspeicher 1 für ein schlauchförmiges Zugmittel 406 z. B. zur Verlängerung eines Gartenschlauches und dergleichen eingesetzt werden kann. Das erste Ende 410 kann bei dieser Ausführungsform der Erfindung beispielsweise ebenfalls innerhalb des Gehäuses 402 befestigt sein, wobei in diesem Falle eine entsprechende Anschlussbuchse oder ein Anschlussadapter in die Seitenwand des Gehäuses 402 integriert ist. Durch Herausziehen des zweiten Endes 414, oder auch des ersten Endes 410 aus dem erfindungsgemäßen Zugmittelspeicher 1 kann somit die darin gespeicherte Menge am Druckmittelschlauch 406 aus dem Gehäuse 402 herausgezogen werden.

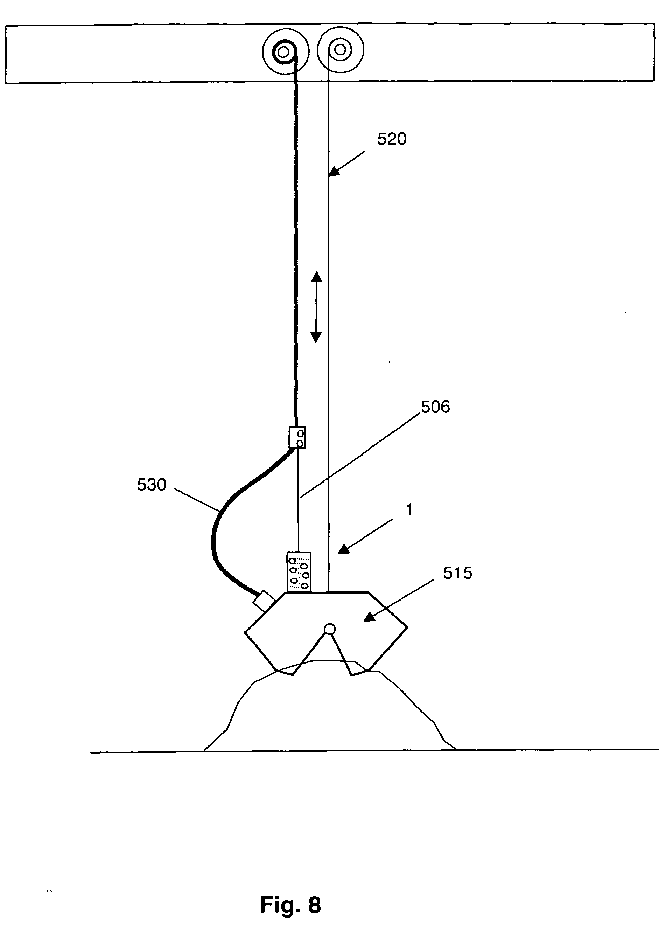

Gemäß einer weiteren, in Fig. 8 dargestellten Einsatzmöglichkeit eines erfindungsgemäßen Zugmittelspeichers 1 ist dieser an der Oberseite eines bekannten Motorgreifers 515 angeordnet, der durch ein Hubseil 520 über einen nicht dargestellten Motor und eine nicht näher bezeichnete Seilwinde auf- und abgefahren werden kann. Neben dem Hubseil 520 ist der Motorgreifer 515 mit einer Stromzuleitung oder einer Steuerleitung 530 verbunden, welche beispielsweise über eine nicht näher bezeichnete Kabeltrommel auf- und abgewickelt wird, und welche die elektrische Energie und/oder die Steuersignale zum Öffnen und Schließen des Motorgreifers 515 zuführt.

Wie der Darstellung von Fig. 8 weiterhin entnommen werden kann, enthält der Zugmittelspeicher 1 ein flexibles Zugseil oder Zugband 506, beispielsweise ein dünnes Stahlseil, das mit seinem einen Ende z.B. mit Hilfe einer Klemmeinrichtung an der Stromzuleitung 530 und mit seinem anderen Ende an der Oberseite des Gehäuses des Motorgreifers 515 befestigt ist. Um die beim Anheben und Ablassen des Motorgreifers 515 in der Praxis aufgrund von Gleichlaufunterschieden zwischen der Seilwinde für das Hubseil 520 und der Kabeltrommel für die Stromzuleitung 530 auftretenden kurzeitigen hohen Zugspannungsbelastungen zu dämpfen, ist die Stromzufuhrleitung 530 im Bereich des Zugseils 506 schlaufenförmig ausgestaltet.

Infolge der sich durch die Schlaufenform ergebenden Überlänge der Stromzufuhrleitung 530 gegenüber dem flexiblen Zugseil 506 hält dieses die Stromzufuhrleitung 530 oberhalb der Schlaufe auch dann unter Zugspannung, wenn sich beim Ab- oder Aufwickeln des Hubseils 520 sowie der Stromzuleitung 530 Längendifferenzen ergeben. Darüber hinaus führt die durch die federelastischen Elemente 8 im Zugmittelspeicher 1 erzeugte Zugspannung des flexiblen Zugseils 506 beim Anlaufen der Kabeltrommel zu einem sanften Anstieg der Zugspannung in der Stromzuleitung 530, wenn diese auf die Kabeltrommel aufgewickelt wird. Das Gehäuse des Zugmittelspeichers 1 ist hierbei in vorteilhafter Weise an der Oberseite des Motorgreifers 515 befestigt.

Gemäß einer weiteren, in den Figuren nicht näher dargestellten Ausführungsform der Erfindung ist die Stromzuleitung 530 des Motorgreifers selbst unmittelbar durch das Gehäuse des Zugmittelspeichers hindurchgeführt, und wird durch die federelastischen Kräfte der federelastischen Elemente 8 in den Zugmittelspeicher hineingezogen, wobei durch die in der Stromzuleitung 530 gebildete Schlaufe sichergestellt wird, dass eine unmittelbare und insbesondere ruckartige Zugbelastung der Stromzuleitung 530 vermieden wird, die bei den Motorgreifern des Standes der Technik in kürzester Zeit zu einer Zerstörung infolge eines Bruch des Kabels 530 führen kann.

In gleicher Weise kann die Stromzuleitung oder das Steuerkabel 530 auch als Lichtwellenleiter oder als eine sonstige optische Fasern enthaltende Leitung zur Datenübertragung ausgestaltet sein. Obwohl die erfindungsgemäße Verwendung am Beispiel eines Motorgreifers 515 beschrieben wurde, gilt das zuvor Gesagte auch für die Stromzuleitung oder Steuerleitung eines bekannten Spreader-Krans.

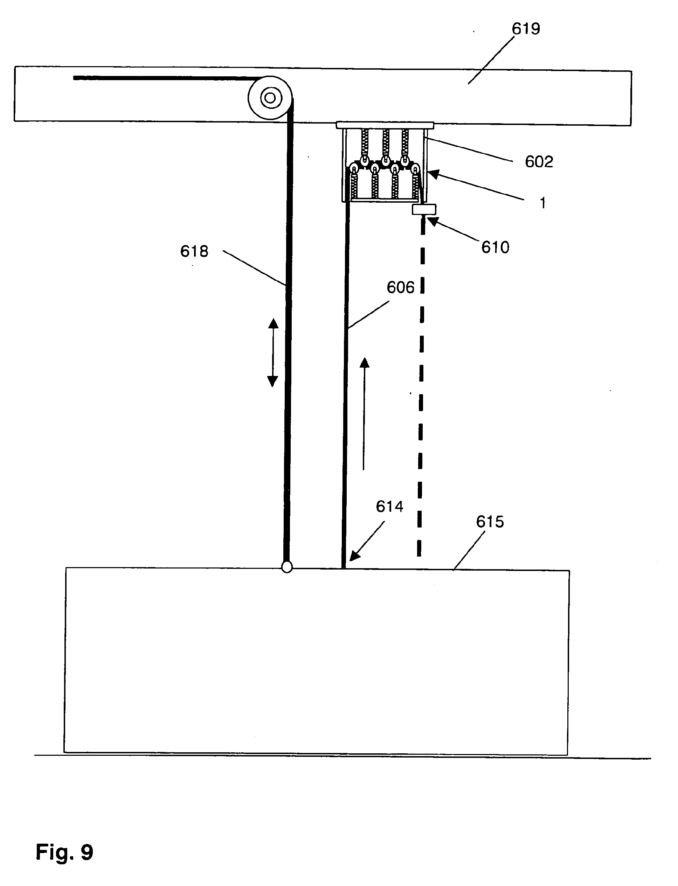

Gemäß der in Fig. 9 dargestellten Einsatzmöglichkeit des erfindungsgemäßen Zugmittelspeichers 1 wird dieser dazu verwendet, beim Anheben und Absenken von Lasten 615, beispielsweise von Containern mittels eines Spreader-Krans oder auch der Kabinen eines Aufzugs, einen Teil der beim Absenken frei werdenden Energie aufzunehmen, um diese bei einem späteren Anheben der Last 615 wiederum zurück zu erhalten. Hierdurch ergibt sich der Vorteil, dass die Kraft, und damit der Energieverbrauch beim Anheben und Absenken der Last 615 mittels eines in Fig. 9 nicht dargestellten Antriebsmotors in erheblichem Umfang reduziert werden kann, so dass in vorteilhafter Weise lediglich ein schwächerer Antriebsmotor benötigt wird. Der verringerte Energieverbrauch wird hierbei dadurch erreicht, dass die Last 615 mit einer zusätzlichen Kraft beaufschlagt wird, die durch den Federspeicher 1 aufgebracht wird.

Die Unterstützung beim Anheben und beim Absenken der Last 615 wird hierbei über ein zusätzliches Zugseil 606 erhalten, welches mit seinem einen Ende 610 im, oder am Gehäuse 602 des Zugmittelspeichers 1 befestigt ist, und dessen anderes Ende 614 vorzugsweise in der Nähe des Angriffspunkts des Hubseils 618 an der Last 615 befestigt ist. Das Gehäuse 602 ist hierbei beispielsweise an einem Ausleger des Spreader-Krans oder einer Traverse 619 oberhalb der Last 615 befestigt. Die Länge des zusätzlichen Zugseils 606 ist hierbei derart bemessen, dass das Zugseil 606 vollständig aus dem Zugmittelspeicher 1 herausgezogen ist, wenn sich die Last 615 auf dem Boden oder in ihrer tiefsten Position befindet. Darüber hinaus kann es vorteilhaft sein, das erste Ende 610 ebenfalls an der Last 615 zu befestigen, so dass beide Enden 610, 614 die Last 615 unterstützend beaufschlagen, wie dies in Fig. 9 anhand des gestrichelt dargestellten weiteren Zugseils angedeutet ist. In diesem Falle ist das erste Ende 610 des Zugseils 606 frei durch die zugehörige Austrittsöffnung hindurchführbar, ohne dass ein in Fig. 9 dargestellter Stopper zum Einsatz gelangt.

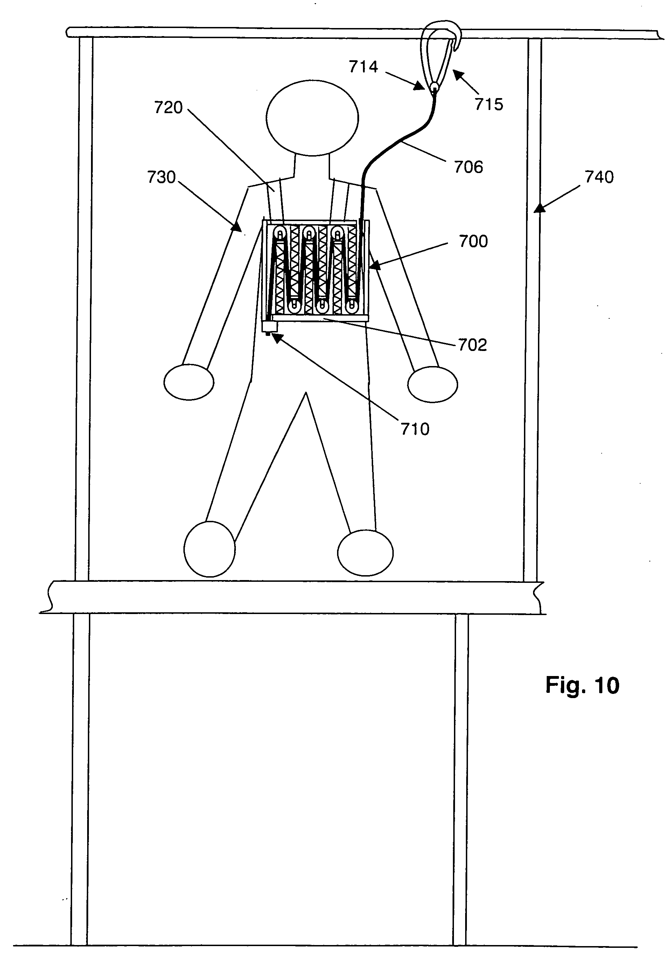

Gemäß der weiteren, in Fig. 10 dargestellten Ausführungsform der Erfindung wird der erfindungsgemäße Zugmittelspeicher 1 als Absturzsicherung 700 für Personen eingesetzt. Hierzu wird der Zugmittelspeicher 1 mit einem Zugmittel in Form eines zugfesten, leichten Sicherungsseils 706, z.B. aus Stahl oder Kevlar, bestückt, welches mit seinem einen Ende 710 innerhalb des Gehäuses 702 oder außerhalb desselben, z.B. durch eine Klemme, befestigt ist. Das Gehäuse 702 wird hierbei mit Gurten 720 vorzugsweise auf dem Rücken einer Person 730 nach Art eines Rucksacks oder Fallschirms befestigt. Das zweite Ende 714 des Sicherungsseils 706 ist mit einem Sicherungsmittel, beispielsweise einem Karabinerhaken 715 verbunden, mittels welchem es an einem festen Teil eines Gerüsts, Krans oder Gebäudes 740 befestigt werden kann, auf welchem die Person 730 arbeitet. Bei einem Herunterstürzen der Person vom Gerüst, Kran oder Gebäude wird das Sicherungsseil 706 entgegen der zunehmenden federelastischen Kräfte aus dem erfindungsgemäßen Zugmittelspeicher 1 herausgezogen, und wirkt hierdurch als ein Puffer-Element, welches den in Abhängigkeit von der Fallhöhe und der Länge des Sicherungsseils 706 entstehenden Ruck auf die Person 730 dämpft, der andernfalls zu schmerzhaften Verletzungen führen kann.

In gleicher Weise ist es jedoch ebenfalls denkbar, dem Zugmittelspeicher 1 oder das erste Ende 710 des Sicherungsseils 706 mit Hilfe des Sicherungsmittels an einem festen Teil des Gerüsts, Gebäudes oder Krans 740 zu befestigen, und das zweite Ende 714 des Sicherungsseils 706 mit der zu sichernden Person 730 zu verbinden.

## Patentansprüche

1. Zugmittelspeicher (1), insbesondere zur Zugentlastung für eine Stromzuleitung eines Motorgreifers oder Spreader-Krans, mit einem Gehäuse (2) sowie mit in dem Gehäuse (2) auf einander gegenüberliegenden Seiten angeordneten Umlenkelementen (4), von denen zumindest eines mit einer federelastischen Kraft beaufschlagbar ist, und über die ein Zugmittel (6, 106, 206, 306, 406, 506, 606, 706) mäanderförmig geführt ist,
**dadurch gekennzeichnet,**
**dass** das Zugmittel (6, 106, 206, 306, 406, 506, 606, 706) durch das Gehäuse (2) des Zugmittelspeichers (1) hindurchgeführt ist.

2. Vorrichtung nach Anspruch 1,
**dadurch gekennzeichnet,**
**dass** das Zugmittel ein flexibles Zugseil oder Zugband (506) umfasst, welches mit seinem einen Ende an der Stromzuleitung (530) und mit seinem anderen Ende am Motorgreifer (515) oder Spreader-Kran befestigt ist.

3. Vorrichtung nach Anspruch 1,
**dadurch gekennzeichnet,**
**dass** das Zugmittel die Stromzuleitung (530) des Motorgreifers (515) oder Spreader-Krans ist, welche durch das Gehäuse des Zugmittelspeichers (1) hindurchgeführt ist.

4. Verwendung eines Zugmittelspeichers, welcher ein Gehäuse,
im Gehäuse auf einander gegenüberliegenden Seiten angeordnete und durch eine federelastische Kraft beaufschlagbare Umlenkelemente sowie ein im Wesentlichen mäanderförmig über die Umlenkelemente geführtes Zugmittel umfasst, als Zugentlastung für eine Stromzuleitung eines Motorgreifers oder Spreader-Krans.

5. Vorrichtung nach einem der vorhergehenden Ansprüche,
**dadurch gekennzeichnet,**
**dass** die Umlenkelemente durch Pneumatikzylinder oder Hydraulikzylinder (18) gebildet werden, die über eine Verbindungsleitung (20) mit einer Druckmittelquelle (24) verbindbar sind.

6. Vorrichtung nach Anspruch 1
**dadurch gekennzeichnet,**
**dass** das Zugmittel ein elektrisches Stromkabel (106) ist, dessen eines Ende (110) mit einem im Wesentlichen ortsfesten Stromanschluss (111) und dessen anderes Ende (114) mit einer beweglichen, einen Stromverbraucher (117, 119) enthaltenden Einrichtung (115) verbunden ist.

7. Vorrichtung nach Anspruch 6,
**dadurch gekennzeichnet,**
**dass** die bewegliche Einrichtung einen Kran und/oder einen durch einen Motor betätigten Greifer (115) einer Ladeeinrichtung umfasst.

8. Vorrichtung nach Anspruch 6,
**dadurch gekennzeichnet,**
**dass** das Stromkabel (106) als Signalleitung eines Positionssensors (119) ausgebildet ist, welcher die Position der beweglichen Einrichtung (115) detektiert.

9. Vorrichtung nach Anspruch 6,
**dadurch gekennzeichnet,**
**dass** die bewegliche Einrichtung ein Fahrstuhl ist, und dass der Positionssensor (119) die momentane Position des Fahrstuhls detektiert.

10. Vorrichtung nach Anspruch 6,
**dadurch gekennzeichnet,**
**dass** der Zugmittelspeicher (1) als ein mobiler Kabelspeicher ausgebildet ist, bei dem die beiden Enden (210, 214) des durch das Gehäuse (202) des Zugmittelspeichers (1) hindurchgeführten Stromkabels (206) mit Steckern (211, 215) versehen sind.

11. Vorrichtung nach Anspruch 1,
**dadurch gekennzeichnet,**
**dass** das Zugmittel ein Zugseil (306) oder Zugband umfasst, welches mit seinem einen Ende (314) mit einer trommelförmigen Aufrolleinrichtung (318) zur Aufnahme eines weiteren, auf die trommelförmige Aufrolleinrichtung (318) aufrollbaren Stromzuführungskabels oder Zugseils (320) zusammenwirkt, in der Weise, dass die Aufrolleinrichtung (318) mit einem Drehmoment zum Zurückziehen des Stromzuführungskabels oder Zugseils (320) beaufschlagt wird.

12. Vorrichtung nach Anspruch 11,
**dadurch gekennzeichnet,**
**dass** die trommelförmige Aufrolleinrichtung die Spule eines Sicherheitsgurtes zur Sicherung von Personen oder Gegenständen in einem Kraftfahrzeug oder Luftfahrzeug ist.

13. Vorrichtung nach Anspruch 1,
**dadurch gekennzeichnet,**
**dass** das Zugmittel ein Flüssigkeits- oder Druckmittelschlauch (406) ist, dessen eines Ende (410) an einen im Wesentlichen ortsfesten Anschluss (411) zur Zufuhr einer Flüssigkeit oder eines Druckmittels anschließbar ist, und dessen anderes Ende (414) mit einer beweglichen, einen Flüssigkeitsoder Druckmittelverbraucher enthaltenden Einrichtung (415) verbunden ist.

14. Verwendung eines Zugmittelspeichers, welcher ein Gehäuse,
im Gehäuse auf einander gegenüberliegenden Seiten angeordnete und durch eine federelastische Kraft beaufschlagbare Umlenkelemente sowie ein im Wesentlichen mäanderförmig über die Umlenkelemente geführtes Zugmittel umfasst, als Kabelspeicher zur Speicherung eines elektrischen Stromkabel zur Versorgung von beweglichen, einen Stromverbraucher enthaltenden Einrichtungen, insbesondere Kränen.

15. Verwendung nach Anspruch 14,
**dadurch gekennzeichnet, dass**
der Kabelspeicher ein tragbarer Kabelspeicher ist, bei dem die beiden Enden des durch den Kabelspeicher hindurchgeführten Stromkabels mit Steckern versehen sind.

16. Verwendung eines Zugmittelspeichers, welcher ein Gehäuse, im Gehäuse auf einander gegenüberliegenden Seiten angeordnete und durch eine federelastische Kraft beaufschlagbare Umlenkelemente sowie ein im Wesentlichen mäanderförmig über die Umlenkelemente geführtes Zugmittel umfasst, zur Kompensation der Gewichtskraft bei Aufzügen und Kränen.

17. Verwendung eines Zugmittelspeichers, welcher ein Gehäuse,
im Gehäuse auf einander gegenüberliegenden Seiten angeordnete und durch eine federelastische Kraft beaufschlagbare Umlenkelemente sowie ein im Wesentlichen mäanderförmig über die Umlenkelemente geführtes Zugmittel umfasst, als mechanischen Antrieb für eine Trommel zum Aufwickeln eines anderen Zugmittels, insbesondere eines elektrischen Stromkabels, eines Flüssigkeits- oder Druckmittelschlauchs oder eines Sicherheitsgurts.

18. Verwendung eines Zugmittelspeichers, welcher ein Gehäuse,
im Gehäuse auf einander gegenüberliegenden Seiten angeordnete und durch eine federelastische Kraft beaufschlagbare Umlenkelemente sowie ein im Wesentlichen mäanderförmig über die Umlenkelemente geführtes Zugmittel umfasst, als Absturzsicherung zur Sicherung von Personen gegen ein Herabstürzen bei der Arbeit an Gebäuden, Kränen und dergleichen.
